# EUROPEAN PATENT APPLICATION

(11) **EP 4 757 425 A1**
(43) Date of publication of application: **10.06.2026**
(21) Application number: 24848944.5
(22) Date of filing: 19.07.2024
(51) Int. Cl.: H04W 48/16, H04W 76/15, H04W 84/12

(54) **COMMUNICATION DEVICE, CONTROL METHOD, AND PROGRAM**

(30) Priority: 31.07.2023 JP 2023125130
(71) Applicant: Canon Kabushiki Kaisha, Tokyo 146-8501 (JP)
(72) Inventor: KAWAKAMI, Daisuke, Tokyo 146-8501 (JP)
(74) Representative: Canon Europe Limited
(86) International application number: PCT/JP2024/025871
(87) International publication number: WO 2025/028289

(57) **Abstract**

A communication apparatus receives a predetermined frame including a predetermined multi-link element from another communication apparatus. In a case where the communication apparatus receives the predetermined frame, the communication apparatus selects a link to be established with the other communication apparatus based on communication quality of links that can be established with the other communication apparatus. The communication apparatus establishes the selected link with the other communication apparatus. In a case where a multi-link is established, the communication apparatus performs multi-link communication via the multi-link.

## Description

### Technical Field

The present invention relates to a communication apparatus that performs wireless communication, a method for controlling the communication apparatus, and a program.

### Background Art

As a major communication standard of a wireless local area network (LAN), the Institute of Electrical and Electronics Engineers (IEEE) 802.11 standard series is known. The IEEE 802.11 standard series includes standards such as IEEE 802.11a/b/g/n/ac/ax and the like.

Further, the IEEE 802.11be standard that is a successor standard to the IEEE 802.11ax is being formulated. As a new function in the IEEE 802.11be standard, a multi-link communication function in which an access point (AP) and a station (STA) establish a plurality of links different in frequency channel and communicate with each other in parallel is being considered. For example, Patent Literature 1 describes a mechanism for establishing a plurality of links for multi-link communication.

The AP and the STA supporting the multi-link communication are respectively referred to as an AP multi-link device (MLD) and a non-AP-MLD (or STA MLD). Further, APs that are associated with the AP MLD and operate in channels different from each other are referred to as affiliated APs, and STAs that are associated with the STA MLD and operate in channels different from each other are referred to as affiliated non-AP STAs (or affiliated STAs).

### Citation List

### Patent Literature

PTL 1: Japanese Patent Laid-Open No. 2021-103805

### Summary of Invention

### Technical Problem

As described above, in the IEEE 802.11be standard and the successor standard thereto, the multi-link communication in which paired terminals establish a plurality of links in parallel and communicate with each other via the plurality of links is being considered. In the multi-link communication, the STA MLD and the AP MLD simultaneously perform data communication via two or more links, which makes it possible to improve throughput.

However, in establishing the plurality of links, if the plurality of links each having poor communication quality is established, a frame transmission/reception error may occur, and the throughput of the communication may be conversely deteriorated. Further, in a case where a link having excellent communication quality and a link having poor communication quality are established, exchange of extra frames occurs due to exchange of information about the link having poor communication quality. Thus, overhead of the communication may be conversely increased as compared with communication using a single link.

### Solution to Problem

The present invention has been made in view of at least one of the above-described issues. One aspect of the present invention is directed to providing a mechanism for improving communication efficiency by selecting an appropriate link at the time of link establishment. Another aspect of the present invention is directed to improving the communication efficiency by establishing an appropriate number of links at the time of link establishment.

To achieve the above, a communication apparatus according to one embodiment of the present invention includes a reception unit configured to receive a predetermined frame including a predetermined multi-link element from another communication apparatus, a selection unit configured to, in a case where the reception unit receives the predetermined frame, select a link to be established with the other communication apparatus based on communication quality of links that can be established with the other communication apparatus, an establishment unit configured to establish the link selected by the selection unit with the other communication apparatus, and a communication unit configured to, in a case where the establishment unit establishes a multi-link, perform multi-link communication via the multi-link. Advantageous Effects of Invention

According to one aspect of the present invention, it is possible to improve the communication efficiency by selecting an appropriate link at the time of link establishment. Further, according to another aspect of the present invention, it is possible to improve the communication efficiency by establishing an appropriate number of links at the time of link establishment.

Other features and advantages of the present invention will become apparent from the following description with reference to the accompanying drawings. In the accompanying drawings, the same or similar components are denoted by the same reference numerals. Brief Description of Drawings

The accompanying drawings are incorporated in and constitute a part of the specification, illustrate embodiments of the present invention, and are used together with the description to explain the principles of the present invention.

[Fig. 1] Fig. 1 is a diagram illustrating an example of a network configuration.
[Fig. 2] Fig. 2 is a diagram illustrating an example of a hardware configuration of an access point multi-link device (AP MLD) or station multi-link device (STA MLD).
[Fig. 3] Fig. 3 is a diagram illustrating an example of a functional configuration of the AP MLD or STA MLD.
[Fig. 4] Fig. 4 is a diagram illustrating an example of a sequence of Multi-Link connection.
[Fig. 5] Fig. 5 is a diagram illustrating an example of a flowchart relating to establishment of a link according to a first embodiment.
[Fig. 6] Fig. 6 is a diagram illustrating an example of a flowchart relating to establishment of a link according to a second embodiment.

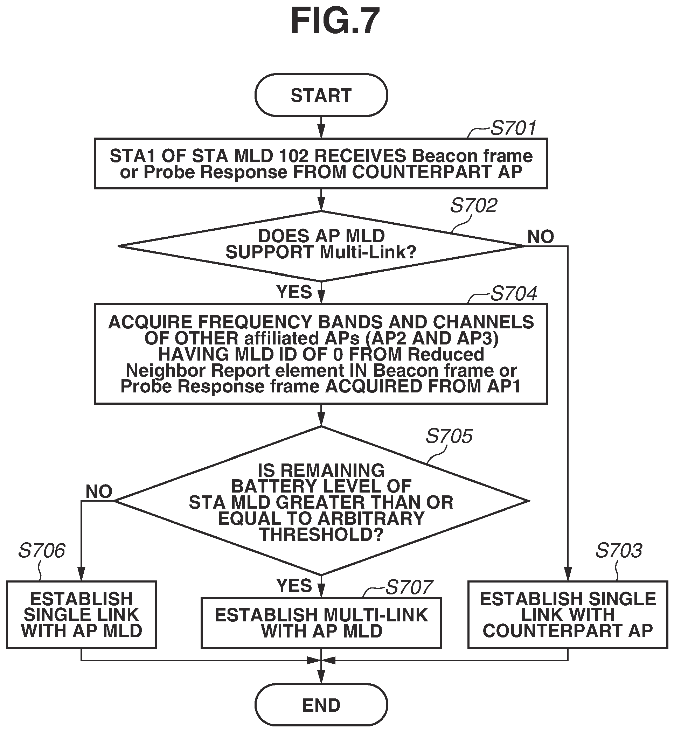

[Fig. 7] Fig. 7 is a diagram illustrating an example of a flowchart relating to establishment of a link according to a third embodiment.

### Description of Embodiments

### <First Embodiment>

Hereinafter, embodiments of the present invention will be described in detail with reference to the accompanying drawings. It should be noted that the configurations described in the following embodiments are merely examples, and the present invention is not limited to the illustrated configurations.

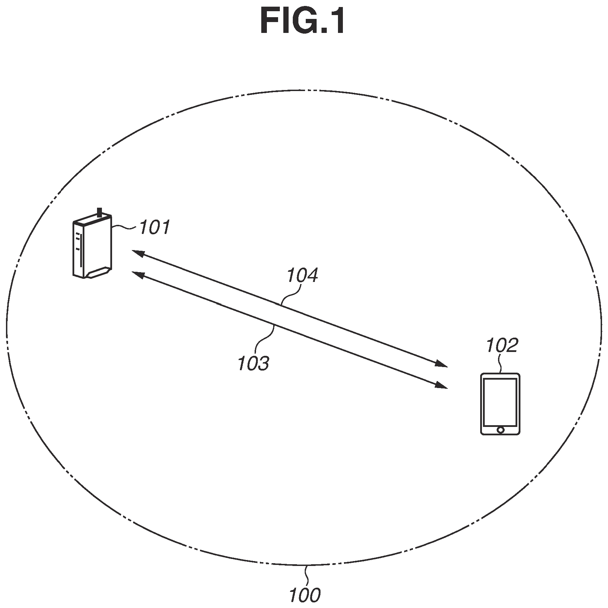

Fig. 1 illustrates an example of a network configuration according to the present embodiment. Fig. 1 illustrates a configuration example in which a station multi-link device (STA MLD) 102 operating as a terminal station participates in a network 100 constructed by an access point multi-link device (AP MLD) 101 operating as a base station. Note that AP MLD is an abbreviation for access point multi-link device, and STA MLD is an abbreviation for station multi-link device. Further, the STA MLD is also referred to as a non-AP MLD. The AP MLD 101 and the STA MLD 102 are communication apparatuses capable of transmitting and receiving signals to and from each other. Further, each of the communication apparatuses (AP MLD 101 and STA MLD 102) is capable of performing wireless communication in compliance with the Institute of Electrical and Electronics Engineers (IEEE) 802.11be (Extremely High Throughput (EHT)) standard. Note that IEEE is an abbreviation for Institute of Electrical and Electronics Engineers. Further, EHT is an abbreviation for Extremely High Throughput. Alternatively, it may be interpreted that EHT is an abbreviation for Extreme High Throughput. Each of the communication apparatuses is capable of performing communication in frequency bands of a 2.4 GHz band, a 5 GHz band, and a 6 GHz band. The frequency bands used by each of the communication apparatuses are not limited thereto, and different frequency bands such as a 60 GHz band may be used. Further, each of the communication apparatuses is capable of performing communication using channels having frequency bandwidths of 20 MHz, 40 MHz, 80 MHz, 160 MHz, and 320 MHz. The frequency bandwidths of the channels used by each of the communication apparatuses are not limited thereto, and different frequency bandwidths such as 240 MHz and 4 MHz may also be used.

While each of the communication apparatuses supports the IEEE 802.11be standard, each of the communication apparatuses may additionally support legacy standards that are standards before the IEEE 802.11be standard. Specifically, each of the communication apparatuses may support at least any one of IEEE 802.11a/b/g/n/ac/ax standards. Further, each of the communication apparatuses may support any one of successor standards including an IEEE 802.11bn standard that is a successor standard to the IEEE 802.11be standard. The IEEE 802.11bn standard is a successor standard to the IEEE 802.11be standard and that aims at improving reliability and achieving low latency, and may also be referred to as IEEE 802.11 Ultra High Reliability (UHR). A wireless frame communicated in the 11bn standard is also referred to as UHR PPDU. PPDU is an abbreviation for PLCP Protocol Data Unit. PLCP is an abbreviation for Physical Layer Convergence Protocol. The IEEE 802.11 standards including the legacy standards and the successor standards described above are referred to as IEEE 802.11 series standards. Further, in addition to the IEEE 802.11 series standards, other communication standards such as Bluetooth^{®}, Near Field Communication (NFC), Ultra Wide Band (UWB), ZigBee, and Multi Band OFDM Alliance (MBOA) may also be supported. Note that UWB is an abbreviation for Ultra Wide Band, and MBOA is an abbreviation for Multi Band OFDM Alliance. Further, NFC is an abbreviation for Near Field Communication. The UWB includes wireless universal serial bus (USB), wireless 1394, WiNET, and the like. Further, a communication standard of wired communication such as a wired local area network (LAN) may also be supported. Specific examples of the AP MLD 101 include a wireless LAN router and a personal computer (PC), but are not limited thereto, and the AP MLD 101 may be any communication apparatus that can operate as an access point. Further, the AP MLD 101 may be an information processing apparatus such as a wireless chip that can perform wireless communication in compliance with the IEEE 802.11be standard. Further, specific examples of the STA MLD 102 include a camera, a tablet, a smartphone, a PC, a mobile phone, a video camera, a headset, a network camera, a printer, and a projector, but are not limited thereto. The STA MLD 102 may be an information processing apparatus such as a wireless chip that can perform wireless communication in compliance with the IEEE 802.11be standard.

The AP MLD 101 and the STAMLD 102 are multi-link devices (MLDs) that can establish a plurality of links (multi-link) of different frequency channels and perform multi-link communication in which communication is performed via the multi-link. Further, the AP MLD includes a plurality of affiliated APs (hereinafter, APs) to establish the plurality of links. Further, the STA MLD includes a plurality of affiliated STAs (hereinafter, STAs) to establish the plurality of links.

In the IEEE 802.11 series standards, a bandwidth of each of the frequency channels is defined as 20 MHz. In this context, the frequency channels refer to frequency channels defined in the IEEE 802.11 series standards. In the IEEE 802.11 series standards, a plurality of frequency channels is defined in each of the frequency bands of the 2.4 GHz band, the 5 GHz band, the 6 GHz band, and the 60 GHz band. It is also possible to use a bandwidth of 40 MHz or more in a single frequency channel by bonding adjacent frequency channels. For example, the AP MLD 101 can establish a link 103 with the STA MLD 102 via a first frequency channel in the 5 GHz band and communicate therewith. In parallel with this, the STAMLD 102 can establish a link 104 with the AP MLD 102 via a second frequency channel in the 6 GHz band and communicate therewith. In this case, the STA MLD 102 performs multi-link communication that maintains the second link 104 via the second frequency channel in parallel with the link 103 via the first frequency channel.

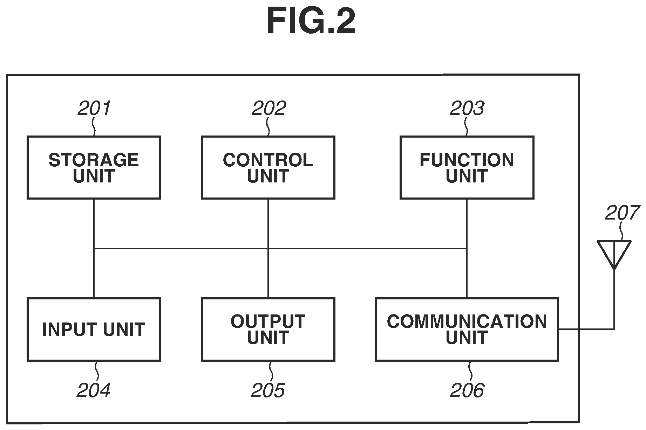

Fig. 2 illustrates an example of a hardware configuration of the STA MLD 102 according to the present embodiment. The STAMLD 102 includes a storage unit 201, a control unit 202, a function unit 203, an input unit 204, an output unit 205, a communication unit 206, and an antenna 207. A plurality of antennas may be provided.

The storage unit 201 includes one or more memories such as a read only memory (ROM) and a random access memory (RAM), and stores computer programs for performing various kinds of operation described below, and various kinds of information such as communication parameters for wireless communication. ROM is an abbreviation for read only memory, and RAM is an abbreviation for random access memory. As the storage unit 201, in addition to the memories such as the ROM and the RAM, a storage medium such as a flexible disk, a hard disk, an optical disk, a magnetooptical disk, a compact disc read-only memory (CD-ROM), a compact disc recordable (CD-R), a magnetic tape, a nonvolatile memory card, and a digital versatile disc (DVD), may be used. The storage unit 201 may include a plurality of memories.

The control unit 202 includes one or more processors such as a central processing unit (CPU) and a micro processing unit (MPU), and controls the entire STA MLD 102 by executing the computer programs stored in the storage unit 201. Additionally, the control unit 202 may control the entire STA MLD 102 by cooperation of the computer programs and an operating system (OS) stored in the storage unit 201. Further, the control unit 202 generates data and signals (wireless frames) to be transmitted in communication with another communication apparatus. Note that CPU is an abbreviation for central processing unit, and MPU is an abbreviation for micro processing unit. Additionally, the control unit 202 may include a plurality of processors such as a multi-core processor, and the plurality of processors may control the entire STA MLD 102.

Further, the control unit 202 controls the function unit 203 to perform predetermined processing such as wireless communication, imaging, printing, and projection. The function unit 203 is hardware for the STA MLD 102 to perform the predetermined processing.

The input unit 204 receives various kinds of operation from a user. The output unit 205 performs various kinds of outputs to the user via a monitor screen and a speaker. Here, the outputs by the output unit 205 may include display on the monitor screen, audio output by the speaker, vibration output, and the like. Both the input unit 204 and the output unit 205 may be implemented by one module such as a touch panel. Further, the input unit 204 and the output unit 205 may each be integrated with or separate from the STA MLD 102.

The communication unit 206 controls wireless communication in compliance with the IEEE 802.11be standard. Further, in addition to the IEEE 802.11be standard, the communication unit 206 may also control wireless communication in compliance with the other IEEE 802.11 series standards, and wired communication such as a wired LAN. The communication unit 206 controls the antenna 207 to transmit and receive signals for the wireless communication generated by the control unit 202.

In a case where the STAMLD 102 supports the NFC standard, the Bluetooth^{®} standard, and the like in addition to the IEEE 802.11be standard, control of wireless communication in compliance with these communication standards may be performed. Further, in a case where the STA MLD 102 can perform wireless communication in compliance with a plurality of communication standards, the configuration may be such that a communication unit and an antenna corresponding to each of the communication standards are individually provided. The STAMLD 102 communicates data such as image data, document data, and video data with the AP MLD 101 via the communication unit 206. Note that the antenna 207 may be configured as a separate unit from the communication unit 206, or the antenna 207 and the communication unit 206 may be configured as one module.

The antenna 207 is an antenna that can perform communication in the 2.4 GHz band, the 5 GHz band, and the 6 GHz band. The STA MLD 102 may include one or a plurality of antennas. Further, the STAMLD 102 may include different antennas for respective frequency bands. In addition, in a case where the STA MLD 102 includes the plurality of antennas, the STA MLD 102 may include communication units 206 corresponding to the respective antennas.

Note that the AP MLD 101 includes a hardware configuration similar to that of the STA MLD 102. In addition, the number of each of the components included in the STA MLD 102 may be equal to the number of STAs included in the STA MLD, or each of the components may be shared by the STAs.

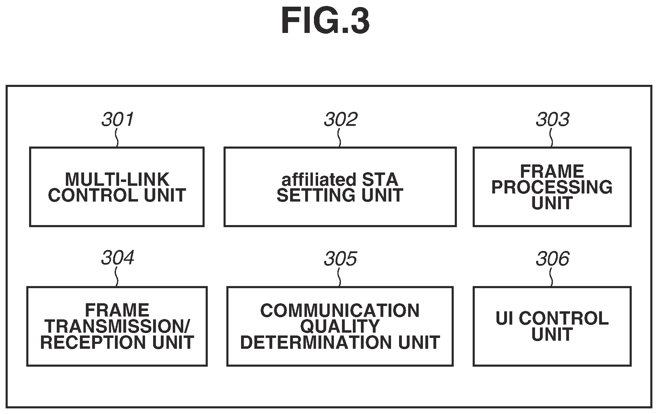

Fig. 3 is a block diagram illustrating an example of a functional configuration of the STA MLD 102 according to the present embodiment. In the present embodiment, each functional block is stored as a program in the storage unit 201, and a function thereof is implemented by the corresponding program being executed by the control unit 202. The control unit 202 executes the programs to control respective hardware components, and performs calculation and processing of information to realize respective functions. It is also possible to realize a part or all of the present functional block by hardware. In this case, a part or all of the functional block may be configured by, for example, an application specific integrated circuit (ASIC). While, in the present embodiment, the AP MLD 101 has a similar configuration, in the AP MLD 101, an affiliated STA setting unit 302 of the present configuration is replaced with an affiliated AP setting unit.

In the present embodiment, the STA MLD 102 includes a multi-link control unit 301, the affiliated STA setting unit 302, a frame generation unit 303, a frame transmission/reception unit 304, a communication quality measurement unit 305, and a user interface (UI) control unit 306.

The multi-link control unit 301 performs control of processing relating to establishment of links, such as link establishment processing for the STA MLD 102 to establish one or more links used for wireless communication with the AP MLD 101, communication start processing, link addition/deletion processing after the links are established, and communication end processing for deleting all the links. The link establishment processing mainly includes an Authentication process, an Association process, and a 4-Way-Hand-Shake (4WHS) process.

The affiliated STA setting unit 302 selects and determines an affiliated STA for various kinds of processing. For example, the affiliated STA setting unit 302 performs control of processing for selecting and determining an affiliated STA of the STA MLD 102 used in the link establishment processing, and processing for selecting and determining an affiliated STA of the STA MLD 102 used in frame transmission and reception processing.

The frame processing unit 303 performs processing for generating a wireless control frame to be transmitted by the frame transmission/reception unit 304, and processing for analyzing a frame received via the frame transmission/reception unit 304. In addition, the frame processing unit 303 performs processing for interpreting and generating a frame by referring to an operation setting such as parameters for communication stored in the storage unit 201. It is also possible to configure such that the operation setting is changed based on an user operation received via the UI control unit 306. Information on the frame generated by the processing unit 303 is transmitted to a communication partner via the frame transmission/reception unit 304. Further, information on the frame received by the frame transmission/reception unit 304 is passed to and analyzed by the frame processing unit 302.

The frame transmission/reception unit 304 is configured to include an antenna and a circuit for transmitting and receiving wireless signals to and from another wireless LAN apparatus, and programs for controlling the antenna and the circuit. The frame transmission/reception unit 304 performs communication control of a wireless LAN based on the frame generated by the frame processing unit 303 in accordance with the IEEE 802.11 series standards.

The communication quality measurement unit 305 measures communication quality of a communication environment based on a Beacon/Probe Response frame and the like received by the frame transmission/reception unit 304. Note that examples of the communication quality include a Received Signal Strength Indicator (RSSI), a Signal-to-Noise Ratio (SNR), and a Modulation and Coding Scheme (MCS), but are not limited thereto. Note that RSSI is an abbreviation for Received Signal Strength Indicator, and is a value indicating strength of a radio wave. Further, SNR is an abbreviation for Signal-to-Noise Ratio (or Signal Noise Rate), and is a value indicating a ratio of the strength of a radio wave of a target terminal to the strength of a radio wave of another terminal. Further, MCS is an abbreviation for Modulation and Coding Scheme, and is information that indexes a combination of a wireless modulation scheme, a coding rate, and the like.

The UI control unit 306 includes hardware relating to a user interface such as a touch panel and a button for receiving an operation from the user, and programs for controlling the hardware. For example, the multi-link control unit 301 selects a counterpart device to which the STA MLD 102 connects by receiving the operation from the user via the UI control unit 306. The affiliated STA setting unit 302 performs the processing for selecting and determining an affiliated STA of the STA MLD 102 used when the STA MLD 102 establishes links, by receiving an operation from the user via the UI control unit 306. The UI control unit 306 may further have a function of presenting information such as audio output to the user.

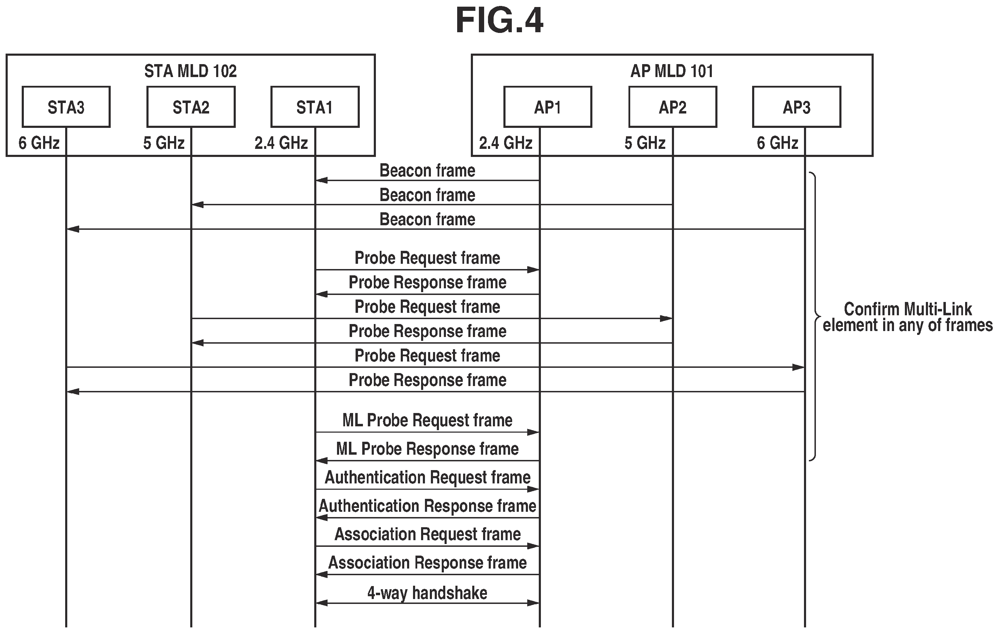

Next, outline of processing for establishing Multi-Link communication is described. Fig. 4 is a sequence diagram illustrating an example of multi-link establishment processing according to the present embodiment. In the present embodiment, as discovery processing, outline of processing is described in which the STA MLD and the AP MLD discover and detect surrounding MLDs by using a Beacon frame and Probe Request/Response frames. Then, as link establishment processing, processing is described in which the STA MLD and the AP MLD establish links with the MLDs detected in the discovery processing using Authentication Request/Response frames and Association Request/Response frames.

In Fig. 4, the AP MLD 101 includes an affiliated AP1 (AP1), an affiliated AP2 (AP2), and an affiliated AP3 (AP3). Note that the AP1 operates in the 2.4 GHz band, the AP2 operates in the 5 GHz band, and the AP3 operates in the 6 GHz band. Further, the STAMLD 102 includes an affiliated STA1 (STA1), an affiliated STA2 (STA2), and an affiliated STA3 (STA3). The STA1 operates in the 2.4 GHz band, the STA2 operates in the 5 GHz band, and the STA3 operates in the 6 GHz band.

First, each of the APs included in the AP MLD 101 transmits a Beacon frame in a frequency band in which each AP operates, to transmit information on the network constructed by the AP MLD 101 to surrounding communication apparatuses. Note that, in the present embodiment, each of the APs (AP1, AP2, and AP3) transmits a Beacon frame, but this is not limiting, and only a selected AP (e.g., only AP1) may transmit a Beacon frame.

Next, each of the STAs included in the STA MLD 102 transmits a Probe Request frame in a frequency band in which each STA operates, to perform discovery around the STA MLD 102 and acquisition of information. In the present embodiment, each of the STAs (STA1, STA2, and STA3) transmits a Probe Request frame, but this is not limiting, and only a selected STA (e.g., only the STA1) may transmit an ML Probe Request frame. Note that the ML Probe Request frame is a discovery request including a Multi-Link element described below, and is a frame to be transmitted for discovering surrounding AP MLDs. Further, each of the STAs receives a Probe Response frame (or ML Probe Response frame) transmitted from each of the APs of the AP MLD 101 as a response to the transmitted Probe Request frame to acquire information about the AP MLD 101. On the other hand, the AP MLD 101 receives the Probe Request frame (or the ML Probe Request frame) transmitted from the STA MLD 102 to acquire information about the STA MLD 102.

In the present embodiment, it is described that the AP MLD 101 transmits the Beacon frame, and then, the STA MLD 102 transmits the Probe Request frame, but this is not limiting. The transmission of the Probe Request frame by the STA MLD 102 may be performed first, or the transmission of the Beacon frame by the AP MLD 101 may not be performed.

In this way, in the discovery processing according to the present embodiment, each of the communication apparatuses includes a Multi-Link element in each frame to be transmitted. Note that the Multi-Link element refers to, for example, a Basic Multi-Link element or a Probe Request Multi-Link element. Then, based on a fact that the Multi-Link element is included in any frame received in the discovery processing, each of the communication apparatuses determines that establishment of a multi-link is possible in connection with a communication apparatus that has transmitted the frame including the Multi-Link element. In other words, the AP MLD 101 determines that the STA MLD 102 is a MLD and establishment of a multi-link with the STAMLD 102 is possible based on a fact that the Multi-Link element is included in the Probe Request frame received from the STA MLD 102. Further, the STA MLD 102 determines that the AP MLD 101 is a MLD and establishment of a multi-link with the AP MLD 101 is possible based on a fact that the Multi-Link element is included in the Beacon frame or the Probe Response frame received from the AP MLD 101.

Furthermore, in the discovery processing, the STA MLD 102 acquires information on each of the APs of the counterpart AP MLD 101 as information for establishing links in link establishment processing described below. The STAMLD 102 acquires a frequency band and channel information on each of the APs included in the AP 101 from a Reduced Neighbor Report (RNR) element included in the Beacon frame or the Probe Response frame transmitted by the AP MLD 101. Then, the STA MLD 102 performs the link establishment processing described below based on the information on each of the APs acquired from the RNR element.

Subsequently, the link establishment processing of each of the communication apparatuses in the multi-link establishment processing is described. In the link establishment processing according to the present embodiment, the AP MLD 101 and the STA MLD 102 establish links by transmitting and receiving various kinds of frames that are an Authentication frame, an Association frame, and a frame relating to 4-Way handshake.

First, the STAMLD 102 transmits an Authentication Request frame using any link among the links to be established with the AP MLD 101. Assume that communication of the various kinds of frames in the establishment processing is performed through the link through which the Authentication Request frame has been transmitted. In response thereto, the AP MLD 101 transmits an Authentication Response frame as a response to the Authentication Request frame. In the present embodiment, the STA MLD 102 and the AP MLD 101 establish a multi-link by transmitting and receiving various kinds of frames by using the STA1 and AP1, respectively.

Next, the STA MLD 102 transmits an Association Request frame including information about the links to be established with the AP MLD 101. For example, the STA MLD 102 indicates that a plurality of links is to be established with the AP MLD 101 by adding, to the frame, information about the plurality of links in which the AP1, the AP2, and the AP3 operate. In response thereto, the AP MLD 101 transmits an Association Response frame including information for permitting (or rejecting) establishment of the links with the STA MLD 102. By the establishment of the plurality of links being permitted by the Association Response frame, the plurality of links is established between the STA MLD 102 and the AP MLD 101.

The establishment processing of each of the communication apparatuses in the multi-link establishment processing is described above. In the above description, in the establishment processing according to the present embodiment, three links, namely links in the 2.4 GHz band, the 5 GHz band, and the 6 GHz band, are assumed to be established, but this is not limiting. For example, only one link (single link) may be established in the link establishment processing.

Further, in the multi-link communication, the links between the communication apparatuses may be established via a plurality of different channels included in the same frequency band. For example, channel 36 in the 5 GHz band may be established as a first link, and in addition, channel 48 in the 5 GHz band may be established as a second link. Note that links in the same frequency band and links in different frequency bands may coexist. For example, the AP MLD 101 and the STA MLD 102 may establish, in addition to the link 103 on the channel 36 in the 5 GHz band, a link on channel 149 in the 5 GHz band and a link on channel 15 in the 6 GHz band. By the AP MLD 101 establishing a plurality of connections different in frequency band with the STA MLD 102, even in a case where a certain band is congested, the AP MLD 101 can establish communication with the STA MLD 102 in another band. This makes it possible to prevent throughput reduction and communication delay in the communication with the STA MLD 102.

Meanwhile, in establishing the plurality of links, if all communication links that can be established are established simply based on capability of the apparatus through the establishment processing described with reference to Fig. 4, the plurality of links including a link not excellent in communication quality may be established.

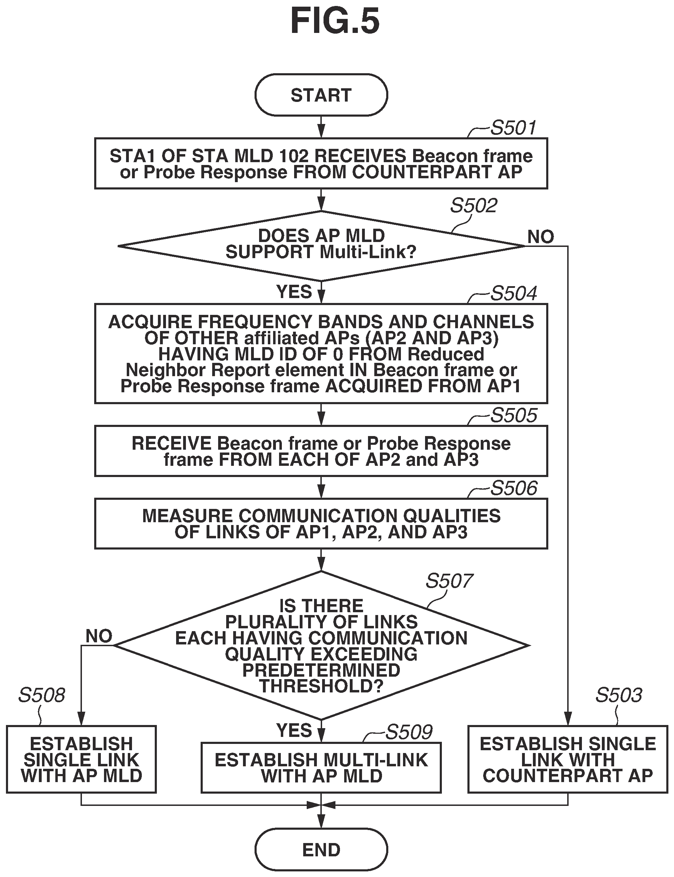

In this case, even if a plurality of links each having poor communication quality is established, a frame transmission or reception error may occur, and throughput of the communication may not be improved. Further, in a case where a link having excellent communication quality and a link having poor communication quality are established, exchange of extra frames occurs because of exchange of information about the link having poor communication quality. Thus, it is considered that overhead of the communication may be conversely increased as compared with communication using a single link. In consideration of the situation, in the present embodiment, a mechanism is provided in which, when the processing for establishing the plurality of links is performed, communication quality is measured, and control for selecting a link to be established is performed based on the communication quality, to establish more suitable links. A specific description is given with reference to a flowchart. Fig. 5 is a flowchart illustrating an example of processing in which, after the STA MLD 102 recognizes that the counterpart AP MLD 101 is a communication apparatus (MLD) with which a multi-link can be established, the STA MLD 102 determines which link to use to establish the link(s) (multi-link or single link). In the present embodiment, the STA MLD 102 determines whether to establish the link(s) by using any of the links based on communication quality of each link. In the present embodiment, it is assumed that processing illustrated in the flowchart illustrated in Fig. 5 is implemented when the processor of the control unit 202 of the STAMLD 102 executes a program for implementing each control module. Note that the data transmission and reception processing and the like are implemented in cooperation with hardware such as the communication unit. In a case where it is desired to clarify a subject of the processing, description is given with each of the functional units implemented when the control unit 202 executes the programs as a subject. Note that, as described above, it is also possible to implement a part or all of the processing by hardware such as an ASIC, an Application Specific Standard Product (ASSP), and a System on a Chip (SOC). ASSP is an abbreviation for Application Specific Standard Product, and SoC is an abbreviation for System on a Chip.

The processing is started based on control by the multi-link control unit 301, and for example, is started based on turning-on of the STA MLD 102.

First, in S501, the frame transmission/reception unit 304 of the STA MLD 102 receives a Beacon frame or a Probe Response frame transmitted from the counterpart AP. Note that in the present embodiment, the STA1 of the STA MLD 102 receives a Beacon/Probe Response frame transmitted from the AP1 of the AP MLD 101.

Next, in S502, the frame processing unit 303 of the STA MLD 102 analyzes the Beacon/Probe Response frame received by the frame transmission/reception unit 304 in S501. Then, it is determined whether the counterpart AP is an MLD supporting multi-link based on a result of the analysis. In S502, it is determined whether the counterpart AP is an MLD based on whether a Multi-Link element is included in the Beacon/Probe Response frame transmitted from the counterpart AP. In a case where the Multi-Link element is included in the frame, it is determined that the counterpart AP having transmitted the frame is an MLD, and is an AP with which a multi-link can be established. In contrast, in a case where the Multi-Link element is not included in the Beacon/Probe Response frame received in S601, a single link is established with the counterpartAP having transmitted the frame via a link over which the frame is received, in S503. Note that, in the present embodiment, the counterpart AP is the AP MLD 101, and the Multi-Link element is included in the Beacon/Probe Response frame transmitted from the AP1 of the AP MLD 101.

In a case where it is determined in S502 that the counterpart AP is an AP MLD supporting multi-link, an RNR element included in the Beacon/Probe Response frame transmitted from the AP MLD is analyzed. Then, in S504, based on a result of the analysis, information on an AP different from the AP having transmitted the frame and included in the counterpart AP MLD is acquired. In the present embodiment, the STA MLD 102 acquires information on the AP2 and the AP3 of the AP MLD 101 from the Beacon/Probe Response frame transmitted from the AP1 of the AP MLD 101. In addition, here, for example, information that enables identification of a frequency band of the link over which each of the APs operates and information that enables identification of a channel are acquired from the RNR Element included in the Beacon/Probe Response Beacon/Probe Response frame.

Next, in S505, based on the information acquired in S504, a Beacon/Probe Response frame transmitted from each of the AP2 and the AP3 is received, and detailed information on the AP2 and the AP3 is acquired.

Next, in S506, based on the frame received by the frame transmission/reception unit 304 of the STA MLD 102, the communication quality measurement unit 305 measures communication quality of each of the links over which each of the APs included in the AP MLD 101 operates. For example, the STA MLD 102 transmits a Probe Request frame to each of the APs via the link over which each of the APs included in the AP MLD 101 operates, via the frame transmission/reception unit 304, and receives a Probe Response frame from each of the APs. Then, the communication quality determination unit 305 measures communication quality information based on the received frame.

In S507, it is determined whether the communication quality of each of the links acquired in S506 exceeds a predetermined threshold. Here, the predetermined threshold may be, for example, RSSI = -30 dBm or RSSI = -50 dBm. Providing such a threshold makes it possible to select only a link having high communication quality as the link to be established. Further, the predetermined threshold may be RSSI = -90 dBm or RSSI = -100 dBm. Providing such a threshold makes it possible to select a link that ensures a minimum level of communication quality as the link to be established.

Alternatively, the predetermined threshold may be, for example, SNR = 40, SNR = 25, or SNR = 20. Providing such a threshold makes it possible to select only a link having high communication quality as the link to be established. Further, the predetermined threshold may be SNR = 10. Providing such a threshold makes it possible to select a link that ensures a minimum level of communication quality as the link to be established.

Further, the predetermined threshold may be, for example, communication quality necessary for using an MCS 0. MCS is an index of a combination of a wireless modulation method, a coding rate, and the like, and the MCS to be used varies depending on the communication environment. MCS 0 is a method having the lowest throughput, and is used in a case where the communication environment is extremely poor. In a case where the RSSI is less than a threshold for using the MCS 0, it may be determined that the link is poor in communication environment. In the present embodiment, the communication quality required to use MCS 0 is defined as the predetermined threshold, but this is not limiting. For example, communication quality required to use MCS used in a communication environment better than MCS 0, such as MCS 4, may be defined as the predetermined threshold. The above-described predetermined threshold is merely an example, and the configuration may be such that the user sets the predetermined threshold via the UI control unit 306.

In a case where there is a plurality of links each having the communication quality exceeding the predetermined threshold as a result of the determination in S507, a multi-link is established with the AP MLD 101 via the plurality of links in S509.

In contrast, in a case where there is not the plurality of links each having the communication quality exceeding the predetermined threshold as the result of the determination in S507, a single link is established with the AP MLD 101 in S508. In a case where there is no link having the communication quality exceeding the predetermined threshold, a single link may be established via a link having the highest communication quality.

As above, the embodiment in which, when the STA MLD 102 establishes the links with the AP MLD 101, the STA MLD 102 establishes the multi-link based on the fact that there is the plurality of links each having the communication quality exceeding the predetermined threshold is described. In the above-described manner, the STA MLD 102 appropriately determines whether to establish the multi-link with the AP MLD 101, which makes it possible to prevent overhead from being conversely increased after the STA 102 establishes the multi-link with the AP 101, as compared with establishment of a single link.

### <Second Embodiment>

In the first embodiment, the case where the communication quality is used as a determination criterion for selecting the links is exemplified. In a second embodiment, a description will be given of a mechanism in which a link that is less constrained in terms of transmission and reception is selected as the determination criterion for selecting the links.

There are a multi-link capable of Simultaneous Transmit and Receive (STR) operation and a multi-link capable only of Nonsimultaneous Transmit and Receive (NSTR) operation (not capable of STR operation). The multi-link capable of the STR operation is a multi-link including a pair of links such that, in a case where a multi-link including at least a first link and a second link is established with another communication apparatus, transmission operation is possible over the second link while reception operation is being performed over the first link. In contrast, the multi-link capable only of the NSTR operation is a multi-link configured as a pair of links with a constraint that, in synchronization with a transmission/reception operation on the first link, it is necessary to perform the same transmission/reception operation on the second link. Therefore, the multi-link capable of the STR operation is expected to have improved communication throughput as compared with the multi-link with the constraint of the NSTR operation.

Therefore, in the present embodiment, to establish a multi-link having no constraint of NSTR described above (capable of the STR operation), when the STA MLD 102 establishes links with the AP MLD 101, it is determined whether to establish a multi-link based on whether the AP MLD 101 is capable of the STR operation in a case where the multi-link with the AP MLD 101 is established.

Note that STR is an abbreviation for Simultaneous Transmit and Receive, and NSTR is an abbreviation for Nonsimultaneous Transmit and Receive.

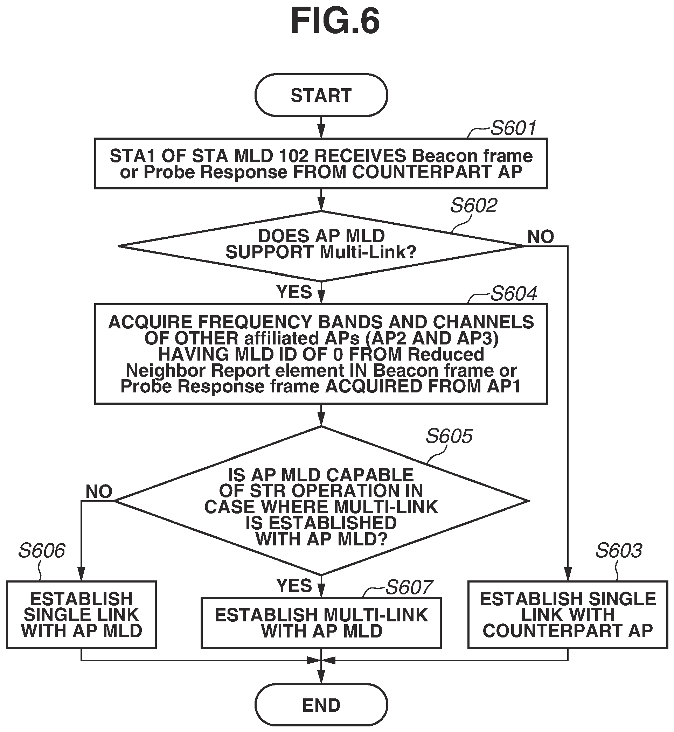

A flow of the present embodiment is described below with reference to Fig. 6.

Processing in S601 to S604 according to the present embodiment is equivalent to the processing in S501 to S504 according to the first embodiment. Thus, description thereof will be omitted.

In the present embodiment, in S605, it is determined whether to perform multi-link connection based on whether the counterpart AP MLD is capable of the STR operation in a case where the multi-link is established with the counterpart AP MLD.

For example, a determination is made as to whether the counterpart AP is capable of the STR operation based on information included in the Multi-Link element of the Beacon/Probe Response frame transmitted by the counterpart AP MLD. More specifically, the determination is made by checking bit 7 of a MLD Capabilities and Operations subfield of the Multi-Link element. In a case where the bit is 1, it is determined that the counterpart AP MLD is capable of the STR operation, whereas in a case where the bit is 0, it is determined that the counterpart AP MLD is not capable of the STR operation.

As a result of the determination, it is determined that the counterpart AP MLD is capable of the STR operation and improvement of communication throughput is expected by establishment of the multi-link, and accordingly, a multi-link is established in S607. In contrast, in a case where it is determined in S607 that the counterpart AP MLD is not capable of the STR operation, in S606, a single link is established with an AP having the highest communication quality based on communication quality information on each of the links calculated in S606.

### <Third Embodiment>

In the first embodiment, the case where the communication quality is used as the determination criterion for selecting the links is exemplified. In the second embodiment, the case where a link that is less constrained in terms of transmission and reception is selected as the determination criterion for selecting the links is exemplified. In a third embodiment, a flow for determining whether to establish a multi-link based on a remaining battery level of the STA MLD 102 when the STA MLD 102 establishes links with the AP MLD 101 is described.

Processing in S701 to S704 according to the present embodiment is equivalent to the processing in s S501 to S504 according to the first embodiment. Thus, description thereof will be omitted.

In the present embodiment, in S705, after calculation of the communication quality information for each of the APs is completed, it is checked whether the remaining battery level of the STA MLD 102 is greater than or equal to an arbitrary threshold. In a case where the remaining battery level of the STA MLD 102 is greater than or equal to the arbitrary threshold, a multi-link is established with the AP MLD 101 in S707. In contrast, in a case where the remaining battery level of the STA MLD 102 is less than the arbitrary threshold, a single link is established with the AP MLD 101 in S706.

The predetermined threshold according to the present embodiment may be, for example, remaining battery level = 20% or remaining battery level = 10%. By providing such a threshold, in a case where suppression of power consumption is desired, it becomes possible to further suppress the power consumption by not establishing a multi-link.

### <Other Embodiments>

Each of the communication apparatuses described in each of the above-described embodiments may be a printer including a printing unit. In a case where the communication apparatus operates as the printer, for example, image data acquired through data exchange with a counterpart apparatus can be printed on a sheet of paper or the like. A printing method of the printer may be an electrophotographic method that implements printing by transferring and fixing toner to the sheet of paper or the like, or may be an inkjet method that implements printing by ejecting color materials to the sheet of paper or the like.

Further, each of the communication apparatuses described in the embodiments may be a digital still camera including an imaging unit. In a case where the communication apparatus operates as the camera, for example, captured data can be communicated with a counterpart apparatus through data exchange.

In the third embodiment, whether to establish a multi-link with the counterpart AP MLD is selected based on the remaining battery level of the STA MLD, but this is not limiting. For example, whether to establish a multi-link may be determined based on whether the STA MLD is operating in a power saving mode with lower power consumption than in normal operation. In this case, in a case where the STA MLD is in normal operation, a multi-link is established with the AP MLD. In contrast, in a case where the STA MLD is operating in the power saving mode, a single link is established with the AP MLD.

The above-described embodiments can be appropriately combined. For example, the STA MLD 102 may be configured to establish a multi-link only in a case where there is a plurality of links each having communication quality exceeding the predetermined threshold among links that can be established between the STA MLD 102 and the AP MLD 101, a multi-link is established over the plurality of links each having the communication quality exceeding the predetermined threshold, and the STA MLD 102 is capable of the STR operation.

Further, a recording medium storing program codes of software for implementing the above-described functions may be supplied to a system or an apparatus, and a computer (CPU or MPU) of the system or the apparatus may read and execute the program codes stored in the recording medium. In this case, the program codes themselves read from the storage medium implement the functions of the above-described embodiments, and the storage medium storing the program codes constitutes the above-described apparatus.

As the storage medium for supplying the program codes, for example, a flexible disk, a hard disk, an optical disk, a magneto-optical disk, a CD-ROM, a CD-R, a magnetic tape, a nonvolatile memory card, a ROM, a DVD, or the like can be used.

Further, the above-described functions may be implemented not only by executing the program codes read by the computer but also by causing an OS running on the computer to perform part or all of actual processing based on an instruction of the program codes. OS is an abbreviation for Operating System.

Further, the program codes read from the storage medium may be written in a memory included in a function expansion board inserted into the computer or a function expansion unit connected to the computer. Then, a CPU included in the function expansion board or the function expansion unit may perform part or all of the actual processing based on the instruction of the program codes to implement the above-described functions.

The present invention can be realized by processing in which a program for implementing one or more functions of the above-described embodiments is supplied to a system or an apparatus via a network or a storage medium, and one or more processors in a computer of the system or the apparatus read and execute the program. The present invention can also be realized by a circuit (for example, an application specific integrated circuit (ASIC)) for implementing one or more functions.

The present invention is not limited to the above described embodiments, and various changes and modifications can be made without departing from the spirit and scope of the present invention. Accordingly, the following claims are appended to disclose the scope of the present invention.

This application claims the benefit of Japanese Patent Application No. 2023-125130, filed July 31, 2023, which is hereby incorporated by reference herein in its entirety.

## Claims

1. A communication apparatus comprising:
a reception unit configured to receive a predetermined frame including a predetermined multi-link element from another communication apparatus;
a selection unit configured to, in a case where the reception unit receives the predetermined frame, select a link to be established with the other communication apparatus based on communication quality of links that can be established with the other communication apparatus;
an establishment unit configured to establish the link selected by the selection unit with the other communication apparatus; and
a communication unit configured to, in a case where the establishment unit establishes a multi-link, perform multi-link communication via the multi-link.

2. The communication apparatus according to Claim 1, wherein, in a case where the selection unit selects only one link as the link to be established, the establishment unit establishes a single link with the other communication apparatus.

3. The communication apparatus according to Claim 1 or 2, wherein, in a case where the selection unit selects a plurality of links as the link to be established with the other communication apparatus, the establishment unit establishes the multi-link including the plurality of links.

4. The communication apparatus according to any one of Claims 1 to 3, wherein, in a case where the reception unit receives the predetermined frame, the selection unit selects a link having communication quality higher than a predetermined threshold.

5. The communication apparatus according to any one of Claims 1 to 4, wherein the predetermined frame is a management frame.

6. The communication apparatus according to any one of Claims 1 to 5, wherein the communication quality is a Received Signal Strength Indicator (RSSI).

7. The communication apparatus according to any one of Claims 1 to 5, wherein the communication quality is a Signal-to-Noise Ratio (SNR).

8. The communication apparatus according to any one of Claims 3 to 7, wherein, in a case where there is no link having communication quality higher than a predetermined threshold, the selection unit selects a link having highest communication quality among the links that can be established.

9. A method for controlling a communication apparatus, the method comprising:
receiving a predetermined frame including a predetermined multi-link element from another communication apparatus;
a selection unit configured to, in a case where the predetermined frame is received in the receiving, select a link to be established with the other communication apparatus based on communication quality of links that can be established with the other communication apparatus;
an establishment unit configured to establish the link selected by the selection unit with the other communication apparatus; and
a communication unit configured to, in a case where the establishment unit establishes a multi-link, perform multi-link communication via the multi-link.

10. A program for causing a computer to function as the method for controlling the communication apparatus according to any one of Claim 9.
